# EUROPEAN PATENT SPECIFICATION

(11) **EP 1 867 507 B1**
(45) Date of publication and mention of the grant of the patent: **12.08.2009**
(21) Application number: 06115554.5
(22) Date of filing: 15.06.2006
(51) Int. Cl.: B60H 1/34

(54) **Air vent outlet nozzle**
Luftausströmer
Buse de sortie d'air

(43) Date of publication of application: 19.12.2007
(73) Proprietor: Ford Global Technologies, LLC, Dearborn, MI 48126 (US)
(72) Inventor: Ahmad, Shilan, 414 56 Göteborg (SE)
(74) Representative: Dahnér, Christer

(56) References cited:
- EP-A2- 1 291 209
- DE-A1-7102004 004 42
- DE-U1- 20 100 740
- DE-U1-0202005 012 57
- US-A- 5 036 753
- US-A- 5 080 002

## Description

### TECHNICAL FIELD

The present invention is related to an outlet nozzle for ventilation or air-conditioning systems in motor vehicles in accordance with the preamble of claim 1.

### BACKGROUND OF THE INVENTION

The present invention relates to ventilation or air-conditioning systems and more particularly to an outlet nozzle in motor vehicles for such a system.

US 5 080 002 discloses an outlet nozzle for ventilation or air-conditioning systems in motor vehicles. A plurality of directional louvers are respectively able to swivel around a swivel axis running parallel to a front edge of the outlet. A coupler which has a plurality of crankguides, where each directional louver is associated with one of these crankguides is provided. The louvers are positionable in a parallel directed airstream setting and a diffused-flow setting when near a back edge of the crankguides on the intake side while being mutually slaved by said crankguides of the coupler. The coupler comprises a flat crank carriage, which is able to be displaced in the axial direction of the outlet nozzle and including the crankguides which run along its surface in order to sweep-slave the directional louvers upon the displacement of the crank carriage. To control the crank carriage, a rotary control knob, whose rotary movement is converted by an integrated crank gear into the horizontal movement of the crank carriage for the horizontal adjustment between the first "directed" louver setting and the second "diffused" lower setting, is provided. The rotary control knob is mounted to the side of the directional louvers within the outlet nozzle housing. Serving the purpose of converting the rotary movement of the control knob into the horizontal movement of the crank carriage is a slotted slaving aperture within the rotary control knob, with which a slaving journal of the crank carriage mates.

Furthermore there is known from DE 10 2004 004 427 an outlet nozzle upon which the preamble of appending claim 1 is based.

### SUMMARY OF THE INVENTION

An object of the present invention is to provide an improved outlet nozzle for ventilation or air-conditioning systems in motor vehicles.

According to a first aspect of the present invention this object is achieved in accordance with the features of claim 1, which specifies that it comprises a plurality of directional louvers which are swivel-mounted around respectively one swivel axis; a crank carriage having a plurality of crankguides each directional louver being associated with one of said crankguides; said crankguides being arranged to sweep-slave the directional louvers upon displacement of the crank carriage, said louvers being positionable between a parallel directed airstream setting and a diffused-flow airstream setting upon displacement of said crank carriage in a first direction; a rotary control knob and a crankgear associated with said rotary control knob and arranged such that rotary motion of the rotary control knob will be transferred to the crank carriage as displacement thereof in said first direction; said crankgear comprising a slaving journal protruding from the rotary control knob at an offset position and into a slaving aperture of the crank carriage; said slaving aperture having an inner rim and being of such dimensions that a central axis of the rotary control knob will be allowed passage there through alongside said protruding slaving journal; said protruding slaving journal being arranged to contact said inner rim of said slaving aperture; at least one spring being arranged to act upon the crank carriage such that an essentially play free contact between the protruding slaving journal and said inner rim of said slaving aperture is retained such that any movement of the protruding slaving journal in said first direction as a result of rotary motion of the rotary control knob will be transferred to the crank carriage via said inner rim of said slaving aperture.

Further embodiments are listed in the dependent claims.

It will be appreciated that features of the invention are susceptible to being combined in any combination without departing from the scope of the claims.

### BRIEF DESCRIPTION OF THE DRAWINGS

By way of example only, embodiments of the present invention will now be described with reference to the accompanying drawings wherein:
- Figure 1: is a schematic illustration of a preferred embodiment of an outlet nozzle for ventilation or air-conditioning systems in motor vehicles in accordance with present invention placed at a directed airstream setting;

- Figure 2: is a schematic illustration of the outlet nozzle of figure 1 placed at a diffused airstream setting;
- Figure 3: is a schematic illustration of the outlet nozzle of figure 1 placed at a parallel downwards directed airstream setting.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

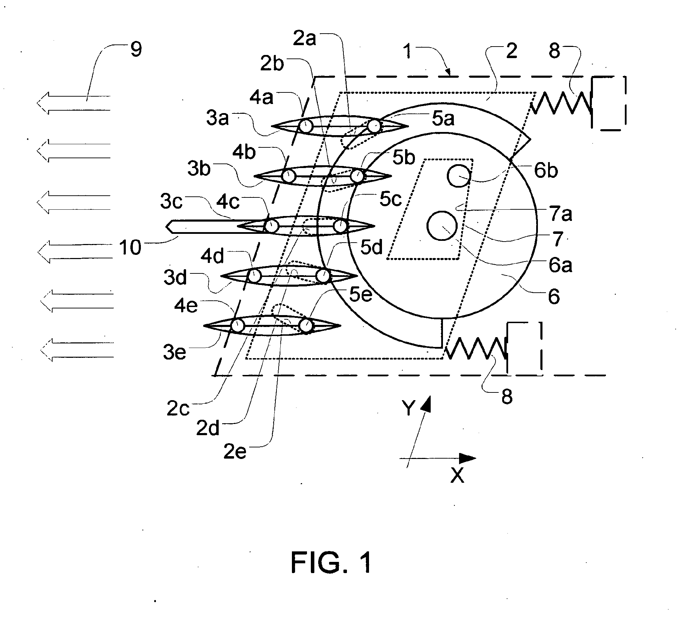

In a preferred first embodiment of the present invention, as shown schematically in FIG. 1, is shown an outlet nozzle 1 for ventilation or air-conditioning systems in motor vehicles, such as automobiles, trucks or any other vehicles having at least one ventilated and/or air-conditioned driver and/or passenger compartment.

According to FIG. 1, shown in dotted lines, a crank carriage 2, which is horizontally and vertically displaceable in an outlet nozzle housing 1, shown in dashed lines, is mounted at one margin of five directional louvers 3a-3e. The air intake is from the right of the crank carriage 2 and the air outflow is to the left of the directional louvers 3a-3e, as illustrated by arrows 9.

The directional louvers 3a-3e are pivotally supported near their front edges by rotatable journals 4a-4e within a wall section of the outlet nozzle housing 1 around horizontal swivel axes. The back edges of the directional louvers 3a-3e are guided into crankways or crank guideways 2a-2e of the crank carriage 2 by marginal journals 5a-5e, which are provided in the vicinity of the back edges of the directional louvers 3a-3e, such that, in the depicted first initial setting of the crank carriage 2 of FIG. 1, the directional louvers 3a-3e are able to be set by vertical movement, i.e. in the Y direction, of the crank carriage 2 to a position in which the directional louvers 3a-3e are parallel with each other and has a changeable directed flow of the airstream, illustrated by arrows 9.

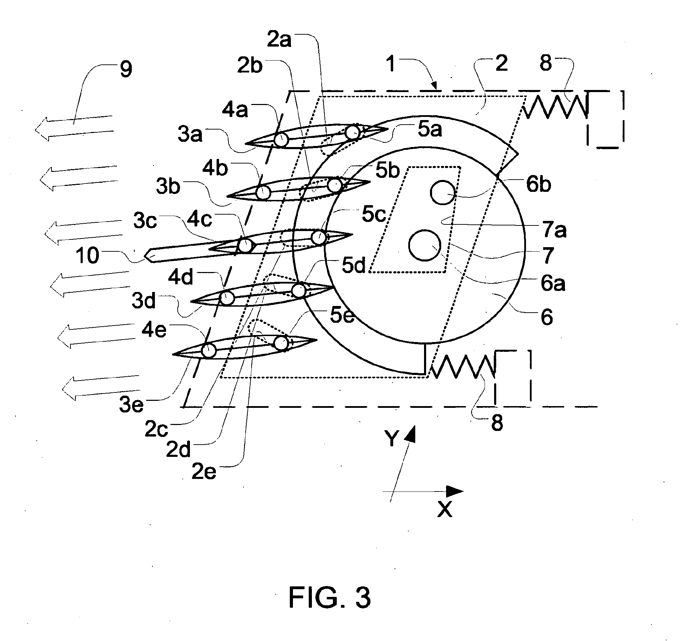

For instance, as illustrated in figure 3, movement of the crank carriage 2 in an upwards direction, i.e. in the +Y direction, would provide a parallel "directed stream" outflow of air in a downward direction, illustrated by arrows 9, as the marginal journals 5a-5e are moved in an upward direction, i.e. +Y direction. Conversely, (not shown), movement of the crank carriage 2 in a downward direction, i.e. -Y direction, would provide a parallel "directed stream" outflow of air in an upward direction as the marginal journals 5a-5e are moved in a downward direction, i.e. -Y direction.

A control knob or extension 10 attached to the left hand side of e.g. as shown in the figures directional louver 3c, or any one of directional louvers 3a-3e, may serve to control this type of a variable directed airstream, whereby the directional louver 3c and, via the crank carriage 2, also the remaining directional louvers 3a,3b,3d and 3e are able to be adjusted by the up and down movements of the control knob or extension 10 so that they are parallel to each other in a manner such that the airstream entering the outlet nozzle from the right hand side may exit upwards, into the middle plane, or downwards into the legroom, or optionally, with potential intermediate settings, into a passenger compartment of the vehicle according to the respective parallel setting of the directional louvers 3a-3e.

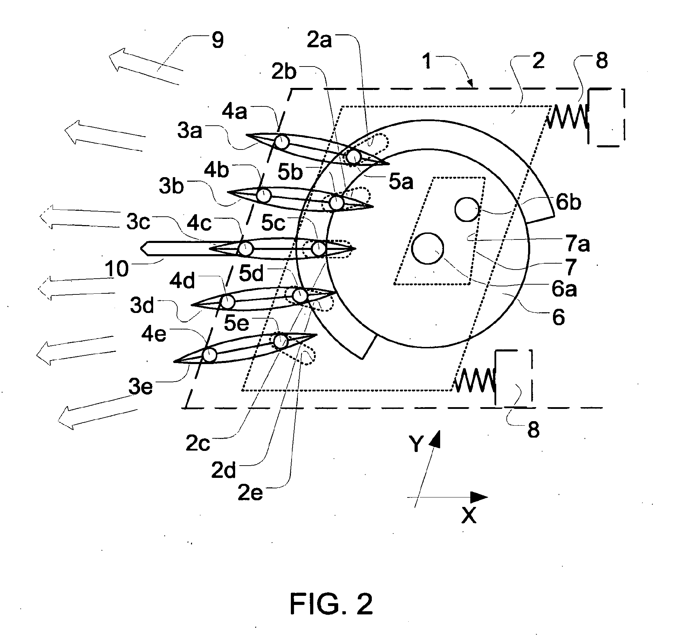

In the case of a movement of the crank carriage 2 in a horizontal +X direction from left to right, i.e. from an outflow toward an intake region of the nozzle, out of the first directed airstream setting shown in FIG. 1 into the second "diffused-flow" setting shown in FIG. 2, the journals 5a-5e of the directional louvers 3a-3e are brought into a diffused-flow setting by correspondingly arranging the crankways 2a-2e, whereby a maximum airstream continues to exit the outlet nozzle; but not as a directed stream of air, which may be considered by a driver/passenger in a passenger compartment of an associated vehicle to be generally uncomfortable, but rather which enters the passenger compartment as a diffused, dispersed flow of air, as illustrated by arrows 9 in FIG. 2, which may be perceived by a driver/passenger as more agreeable.

According to the invention, a rotary control knob 6 or "thumb-wheel", whose rotary motion around a central axis 6a is converted into a translatable movement of the crank carriage 2, is used to control the crank carriage 2 during the horizontal adjustment in the ± X direction between the first "directed" louver setting of FIG. 1, in which the directional louvers 3a-3e are parallel with each other, and the second "diffused" louver setting of FIG. 2, in which the directional louvers 3a-3e are divergent from each other. Serving this purpose is a protruding slaving journal 6b, which protrudes from an offset position of the rotary control knob 6 into a slaving aperture 7 of the crank carriage 2. The protruding slaving journal 6b contacts the slaving aperture 7 at a right hand side inner rim 7a thereof.

One or more springs 8 are arranged to act upon the crank carriage 2 in order to retain an essentially play free contact between the protruding slaving journal 6b and the right hand side inner rim 7a of the slaving aperture 7. These springs 8 are arranged to provide a spring force acting upon the crank carriage 2 to push the crank carriage 2 in the - X direction, i.e. from right to left in the figures, i.e. towards the first "directed" louver setting of FIG: 1, such that any horizontal movement of the protruding slaving journal 6b as a result of rotary motion of the rotary control knob 6 or "thumb-wheel" around its central axis 6a is transferred to the crank carriage 2 via this right hand side inner rim 7a of the slaving aperture 7.

Through this advantageous arrangement the slaving aperture 7 may be made sufficiently large to accommodate a through central axis 6a of the rotary control knob 6 or "thumb-wheel", which enables a more compact and robust design of the nozzle. The design may e.g. be more robust by the through axis 6a of the rotary control knob 6 being attached to the outlet nozzle housing 1 at both sides of said rotary control knob 6, which is facilitated by the above arrangement.

Furthermore, due to the contact force between the protruding slaving journal 6b and the right hand side inner rim 7a of the slaving aperture 7, due to the spring action provided by the springs 8, an automatic "locking" of the directional louvers 3a-3e in the desired position dependent on a rotary position of said rotary control knob 6 may be ensured by friction as the rotary control knob 6 or "thumb-wheel" ceases to be subjected to rotary motion.

While retaining to a large extent known outlet nozzle housing designs, and while maintaining their mounting dimensions, the rotary control knob 6 is integrated on the one margin of the directional louvers 3a-3e within the outlet nozzle housing 1. On the other margin of the directional louvers 3a-3e, then, a corresponding rotary control knob may be provided in a manner not shown here, e.g. to adjust a laterally directed flow effect of the airstream by means of additional directional louvers which are vertically mounted, adjustable, and provided e.g. behind the horizontally mounted directional louvers 3a-3e. In this way is envisaged an outlet nozzle allowing full control of an associated airstream through two orthogonal sets of controllable louvers.

The present invention further relates to an automotive vehicle comprising an outlet nozzle according to any one of the above described embodiments.

Modifications to embodiments of the invention described in the foregoing are possible without departing from the scope of the claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An outlet nozzle for ventilation or air-conditioning systems in motor vehicles comprising:
a plurality of directional louvers (3a, 3b, 3c, 3d, 3e) which are swivel-mounted within an outlet nozzle housing (1) around respectively one swivel axis (4a, 4b, 4c, 4d, 4e);
a crank carriage (2) having a plurality of crankguides (2a, 2b, 2c, 2d, 2e) each directional louver (3a, 3b, 3c, 3d, 3e) being associated with one of said crankguides (2a, 2b, 2c, 2d, 2e);
said crankguides (2a, 2b, 2c, 2d, 2e) being arranged to sweep-slave the directional louvers (3a, 3b, 3c, 3d, 3e) upon displacement of the crank carriage (2); said louvers (3a, 3b, 3c, 3d, 3e) being positionable between a parallel directed airstream setting and a diffused-flow airstream setting upon displacement of said crank carriage (2) in a first direction (±X);
a rotary control knob (6) and a crankgear (6b, 7) associated with said rotary control knob (6) and arranged such that rotary motion of the rotary control knob (6) will be transferred to the crank carriage (2) as displacement thereof in said first direction (±X);
said crankgear (6b, 7) comprising a slaving journal (6b) protruding from said rotary control knob (6) at an offset position and into a slaving aperture (7) of said crank carriage (2);
said slaving aperture (7) having an inner rim (7a) and
said protruding slaving journal (6b) being arranged to contact said inner rim (7a) of
said slaving aperture (7); **characterised in** said slaving aperture (7) being of such dimensions that a central axis (6a) of said rotary control knob (6) will be allowed passage there through alongside said protruding slaving journal (6b);
at least one spring (8) being arranged to act upon said crank carriage (2) such that an essentially play free contact between said protruding slaving journal (6b) and
said inner rim (7a) of said slaving aperture (7) is retained such that any movement of said protruding slaving journal (6b) in said first direction (±X) as a result of rotary motion of said rotary control knob (6) will be transferred to said crank carriage (2) via said inner rim (7a) of said slaving aperture (7).

2. An outlet nozzle according to claim 1, **characterised in**:
said slaving aperture (7) of said crank carriage (2) being arranged to accommodate a through central axis (6a) of said rotary control knob (6).

3. An outlet nozzle according to claim 2, **characterised in**:
said through central axis (6a) of said rotary control knob (6) being attached to said outlet nozzle housing (1) at both sides of said rotary control knob (6).

4. An outlet nozzle according to any one of claims 1 to 3, **characterised in**:
said at least one spring (8) being arranged to exert a contact force between said protruding slaving journal (6b) and said right hand side inner rim (7a) of said slaving aperture (7) ensuring an automatic frictional locking of said directional louvers (3a, 3b, 3c, 3d, 3e) in a desired position dependent on a rotary position of said rotary control knob (6).

5. An outlet nozzle according to any one of claims 1 to 4, **characterised in**:
said rotary control knob (6) being integrated on one margin of said directional louvers (3a, 3b, 3c, 3d, 3e) within said outlet nozzle housing (1).

6. An outlet nozzle according to claim 5, **characterised in**:
an additional rotary control knob being provided to control additional directional louvers arranged within said outlet nozzle housing (1) orthogonally to said directional louvers (3a, 3b, 3c, 3d, 3e).

7. An automotive vehicle **characterised in that:**
it comprises an outlet nozzle according to any one of the preceding claims.

## Patentansprüche

1. Auslassdüse für Lüftungs- oder Klimatisierungssysteme in Kraftfahrzeugen, die umfasst:
mehrere Richtlamellen (3a, 3b, 3c, 3d, 3e), die in einem Auslassdüsengehäuse (1) um jeweils eine Schwenkachse (4a, 4b, 4c, 4d, 4e) schwenkbar angebracht sind;
einen Kurbelträger (2) mit mehreren Kurbelführungen (2a, 2b, 2c, 2d, 2e), wobei jede Richtlamelle (3a, 3b, 3c, 3d, 3e) einer der Kurbelführungen (2a, 2b, 2c, 2d, 2e) zugeordnet ist;
wobei die Kurbelführungen (2a, 2b, 2c, 2d, 2e) dazu ausgelegt sind, die Richtlamellen (3a, 3b, 3c, 3d, 3e) bei Verlagerung des Kurbelträgers (2) mitzuziehen;
wobei die Lamellen (3a, 3b, 3c, 3d, 3e) bei Verlagerung des Kurbelträgers (2) in einer ersten Richtung (±X) zwischen einer Einstellung für parallel gerichteten Luftstrom und einer Einstellung für diffus strömenden Luftstrom positionierbar sind;
einen drehbaren Steuerknopf (6) und einen Kurbeltrieb (6b, 7), der dem drehbaren Steuerknopf (6) zugeordnet ist und dazu ausgelegt ist, dass eine Drehbewegung des drehbaren Steuerknopfs (6) an den Kurbelträger (2) als seine Verlagerung in der ersten Richtung (±X) übertragen wird;
wobei der Kurbeltrieb (6b, 7) einen mitgenommenen Kurbelzapfen (6b) aufweist, der von dem drehbaren Steuerknopf (6) an einer Versatzposition und in eine mitgenommene Öffnung (7) des Kurbelträgers (2) vorsteht;
wobei die mitgenommene Öffnung (7) einen Innenrand (7a) besitzt und
wobei der vorstehende mitgenommene Kurbelzapfen (6b) dazu ausgelegt ist, mit dem Innenrand (7a) der mitgenommenen Öffnung (7) in Kontakt zu gelangen,
**dadurch gekennzeichnet, dass**
die mitgenommene Öffnung (7) Abmessungen hat, derart, dass sich eine Mittelwelle (6a) des drehbaren Steuerknopfs (6) längs des vorstehenden mitgenommenen Kurbelzapfens (6d) durch sie bewegen kann;
wenigstens eine Feder (8) dazu ausgelegt ist, auf den Kurbelträger (2) in der Weise einzuwirken, dass ein im Wesentlichen spielfreier Kontakt zwischen dem vorstehenden mitgenommenen Kurbelzapfen (6b) und dem Innenrand (7a) der mitgenommenen Öffnung (7) aufrechterhalten wird, so dass jegliche Bewegung des vorstehenden mitgenommenen Kurbelzapfens (6b) in der ersten Richtung (±X) als eine Folge der Drehbewegung des drehbaren Steuerknopfs (6) an den Kurbelträger (2) über den Innenrand (7a) der mitgenommenen Öffnung (7) übertragen wird.

2. Auslassdüse nach Anspruch 1, **dadurch gekennzeichnet, dass:**
die mitgenommene Öffnung (7) des Kurbelträgers (2) dazu ausgelegt ist, eine durchgehende Mittelwelle (6a) des drehbaren Steuerknopfs (6) aufzunehmen.

3. Auslassdüse nach Anspruch 2, **dadurch gekennzeichnet, dass:**
die durchgehende Mittelwelle (6a) des drehbaren Steuerknopfs (6) an dem Auslassdüsengehäuse (1) beiderseits des drehbaren Steuerknopfs (6) befestigt ist.

4. Auslassdüse nach einem der Ansprüche 1 bis 3, **dadurch**
**gekennzeichnet, dass:**
die wenigstens eine Feder (8) wenigstens dazu ausgelegt ist, eine Kontaktkraft zwischen dem vorstehenden mitgenommenen Kurbelzapfen (6b) und dem rechten Innenrand (7a) der mitgenommenen Öffnung (7) auszuüben, um eine automatische Reibverriegelung der Richtlamellen (3a, 3b, 3c, 3d, 3e) in einer gewünschten Position in Abhängigkeit von einer Drehposition des drehbaren Steuerknopfs (6) sicherzustellen.

5. Auslassdüse nach einem der Ansprüche 1 bis 4, **dadurch**
**gekennzeichnet, dass:**
der drehbare Steuerknopf (6) in ein Ende der Richtlamellen (3a, 3b, 3c, 3d, 3e) innerhalb des Auslassdüsengehäuses (1) integriert ist.

6. Auslassdüse nach Anspruch 5, **dadurch gekennzeichnet, dass:**
ein zusätzlicher drehbarer Steuerknopf vorgesehen ist, um zusätzliche Richtlamellen zu steuern, die in dem Auslassdüsengehäuse (1) senkrecht zu den Richtlamellen (3a, 3b, 3c, 3d, 3e) angeordnet sind.

7. Kraftfahrzeug, **dadurch gekennzeichnet, dass** es eine Auslassdüse nach einem der vorhergehenden Ansprüche umfasst.

## Revendications

1. Buse de sortie pour systèmes de ventilation ou de climatisation dans des véhicules à moteur, comprenant :
une pluralité de lames directionnelles (3a, 3b, 3c 3d, 3e) qui sont montées pivotantes autour d'un axe de pivotement respectif (4a, 4b, 4c, 4d, 4e) à l'intérieur d'un logement (1) de buse de sortie ;
un chariot-basculeur (2) possédant une pluralité de guides de basculement (2a, 2b, 2c, 2d, 2e), chaque lame directionnelle étant associée à l'un desdits guides (2a, 2b, 2c, 2d, 2e) ;
lesdits guides de basculement (2a, 2b, 2c, 2d, 2e) étant agencés pour asservir par balayage les lames directionnelles (3a, 3b, 3c, 3d, 3e) par déplacement du chariot-basculeur (2) ;
lesdites lames (3a, 3b, 3c, 3d, 3e) étant positionnables entre un réglage avec flux d'air dirigé parallèlement et un réglage avec flux d'air diffus par déplacement dudit chariot-basculeur (2) dans une première direction (±X);
un bouton de commande rotatif (6) et un mécanisme (6b, 7) associé audit bouton de commande rotatif (6) et agencé de telle sorte que le déplacement rotatif du bouton de commande rotatif (6) soit transféré au chariot-basculeur (2) en un déplacement de celui-ci dans ladite première direction (±X) ;
ledit mécanisme (6b, 7) comprenant un tourillon d'asservissement (6b) faisant saillie dudit bouton de commande rotatif (6) dans une position décalée et dans une ouverture d'asservissement (7) dudit chariot-basculeur (2) ;
ladite ouverture d'asservissement (7) ayant un rebord intérieur (7a) et
ledit tourillon d'asservissement saillant (6b) étant agencé pour être en contact avec ledit rebord intérieur (7a) de ladite ouverture d'asservissement (7) ;
***caractérisée en ce que*** ladite ouverture d'asservissement (7) est de dimensions telles qu'un axe central (6a) dudit bouton de commande rotatif (6) soit autorisé à la traverser le long dudit tourillon d'asservissement saillant (6b) ;
au moins un ressort (8) étant prévu pour agir sur ledit chariot-basculeur (2) de telle sorte qu'un contact essentiellement exempt de jeu entre ledit tourillon d'asservissement saillant (6b) et ledit rebord intérieur (7a) de ladite ouverture d'asservissement (7) soit conservé, de telle façon que tout mouvement dudit tourillon d'asservissement saillant (6b) dans ladite première direction (±X) en résultat d'un mouvement rotatif dudit bouton de commande rotatif (6) soit transféré audit chariot-basculeur (2) par l'intermédiaire dudit rebord intérieur (7a) de ladite ouverture d'asservissement (7).

2. Buse de sortie selon la revendication 1, ***caractérisée en ce que*** ladite ouverture d'asservissement (7) dudit chariot-basculeur (2) est prévue pour recevoir un axe traversant central (6a) dudit bouton de commande rotatif (6).

3. Buse de sortie selon la revendication 2, ***caractérisée en ce que*** ledit axe central traversant (6a) dudit bouton de commande rotatif (6) est fixé audit logement (1) de la buse de sortie de part et d'autre dudit bouton de commande rotatif (6).

4. Buse de sortie selon l'une quelconque des revendications 1 à 3, ***caractérisée en ce que*** ledit au moins un ressort (8) est prévu pour exercer une force de contact entre ledit tourillon d'asservissement saillant (6b) et ledit rebord intérieur (7a) côté droit de ladite ouverture d'asservissement (7) assurant un verrouillage automatique par friction desdites lames directionnelles (3a, 3b, 3c 3d, 3e) dans une position désirée dépendant d'une position de rotation dudit bouton de commande rotatif (6).

5. Buse de sortie selon l'une quelconque des revendications 1 à 4, ***caractérisée en ce que*** ledit bouton de commande rotatif (6) est intégré sur une marge desdites lames directionnelles (3a, 3b, 3c 3d, 3e) dans ledit logement (1) de la buse de sortie.

6. Buse de sortie selon la revendication 5, ***caractérisée en ce qu*'**un bouton de commande rotatif supplémentaire est prévu pour commander des lames directionnelles supplémentaires placées dans ledit logement (1) de la buse de sortie orthogonalement auxdites lames directionnelles (3a, 3b, 3c 3d, 3e).

7. Véhicule automobile, ***caractérisé en ce qu*'**il comprend une buse de sortie selon l'une quelconque des revendications précédentes.
